Europäisches Patentamt

European Patent Office

Office européen des brevets

(11) Publication number: **0 099 574**
**B1**

# EUROPEAN PATENT SPECIFICATION

(45) Date of publication of patent specification: **15.03.89**

(21) Application number: **83107076.8**

(22) Date of filing: **19.07.83**

(51) Int. Cl.⁴: **F 16 L 59/02, F 16 L 59/06, E 04 B 1/80** // F17C13/00

(54) Composite thermal insulator.

(30) Priority: **20.07.82 JP 126910/82**
**16.12.82 JP 221404/82**

(43) Date of publication of application:
**01.02.84 Bulletin 84/05**

(45) Publication of the grant of the patent:
**15.03.89 Bulletin 89/11**

(84) Designated Contracting States:
**DE FR GB**

(56) References cited:
**EP-A-0 035 620**
**JP-A-57 096 852**
**US-A-3 264 165**
**US-A-3 921 844**
**US-A-3 993 811**

**Chemical Abstract, Vol. 77, No. 4, 24.07.72,
page 342**

(73) Proprietor: **Matsushita Electric Industrial Co.,
Ltd.**
**1006, Oaza Kadoma**
**Kadoma-shi Osaka-fu, 571 (JP)**

(72) Inventor: **Ichihara, Shoichi**
**34-8 Amanogahara-cho, 1-chome Katano-shi
Osaka-fu (JP)**

Inventor: **Yoneno, Hiroshi**
**452-116 Oaza Yuzaki, Kawanishi-cho
Shiki-gun Nara-ken (JP)**

Inventor: **Yamamoto, Ryoichi**
**2-4 Naritaminamimachi Neyagawa-shi
Osaka-fu (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## EP 0 099 574 B1

**Description**

The present invention generally relates to a composite thermal insulator utilizing evacuated powder insulation.

Known inorganic materials for thermal insulators are, for example, glass wool, asbestos, ceramic foam or calcium silicate, and organic materials for this purpose are, for example, represented by expandable substances such as polystyrene, epoxy or polyurethane. These materials are employed for various applications from the viewpoints of heat insulating properties, heat resistance, mechanical strength, workability or economical aspects.

Meanwhile, as low temperature heat insulators for refrigerators and the like, expandable materials such as polyethylene foam, expanded polystrene, foam rubber, rigid polyurethane foam or phenol foam, have been mainly employed, with heat conductivities in the range of $1,74 \times 10^{-4}$ to $4,29 \times 10^{-4}$ W/cm°C (0.015 to 0.037 kcal/mh°C), but from the standpoint of energy conservation, insulating materials having still more favourable heat insulating properties have been required.

On the other hand, for cryogenic or ultra-low temperature heat insulating materials used, for example, for a liquid nitrogen tank or the like, expanded perlite powder subjected to evacuation to form a high vacuum lower than 0,00133 kPa (0.01 Torr) has been used, but in this case, a container in which the expanded perlite is filled must be made of a thick metallic material to withstand the high vacuum, and such a requirement presents an obstacle in the applications of the evacuated powder insulation to various commodities.

A thermal insulator constituted by filling a heat insulating material in a plastic container for subsequent evacuation to form a vacuum, has a heat conductivity less than $1,16 \times 10^{-4}$ W/cm°C (0.01 kcal/mh°C) to show a favourable heat insulating property, but since plastics are generally provided with a large air transmittance as compared with metallic materials, the heat insulating property thereof is deteriorated with time. JP—A—57 96 852 (corresponding to US—A—45 29 638) discloses a composite thermal insulator which comprises a Freon gas expanded plastic, a film like plastic container evacuated to form a vacuum in its interior and partly or entirely covered by said expanded plastic, and an inorganic powder tightly enclosed within said plastic container. However, said prior art thermal insulator is disadvantageous in that part of Freon (name used in trade and manufactured by Du Pont of U.S.A.) gas used for expansion enters the interior of the plastic container, thus resulting in deterioration in the heat insulating property of the composite thermal insulator.

It is the object of the present invention to provide an improved composite thermal insulator which has a mechanical strength sufficient for actual applications, with a heat conductivity of less than $1,16 \times 10^{-4}$ W/cm°C (0.01 kcal/mh°C) and is almost free from deterioration of the insulating property with time.

Said object is achieved by a composite thermal insulator which comprises a Freon gas expanded plastic, a film-like plastic container evacuated to form a vacuum in its interior and partly or entirely covered by said expanded plastic, and an inorganic powder tightly enclosed within said plastic container characterized in that said inorganic powder contains activated carbon which is present at a boundary portion between said film-like plastic container and said inorganic powder other than the activated carbon and sufficient in an amount to at least absorb Freon gas.

The composite thermal insulator of the present invention is light in weight, has a heat conductivity of less than $1,16 \times 10^{-4}$ W/cm°C (0.01 kcal/mh°C) and a mechanical strength sufficient for actual use, with almost no variations with time in the heat insulating property.

The features of the present invention will become apparent from the following description taken in conjunction with the preferred embodiment thereof with reference to the accompanying drawings, in which:

Fig. 1 is a schematic cross sectional view of a composite thermal insulator according to one preferred embodiment of the present invention.

Fig. 2 shows a view similar to Fig. 1 wherein only a part of a film-like plastic container is covered by a Freon gas expanded plastic, and Fig. 3 is a characteristic diagram showing variations of heat conductivities with time of the composite thermal insulators C and D according to the present invention in an atmosphere of Freon-II ($CFCl_3$) gas under one atmospheric pressure of 60°C.

Like parts are designated by like reference numerals throughout the accompanying drawings.

It is preferred that the activated carbon has an average particle diameter of less than 0.15 mm and that it is processed by a steam activation process. The activated carbon is located in a boundary portion between the film-like plastic container and the inorganic powder other than the activated carbon. The activated carbon is preferably used in a state where it is packed in a container having a gas permeability.

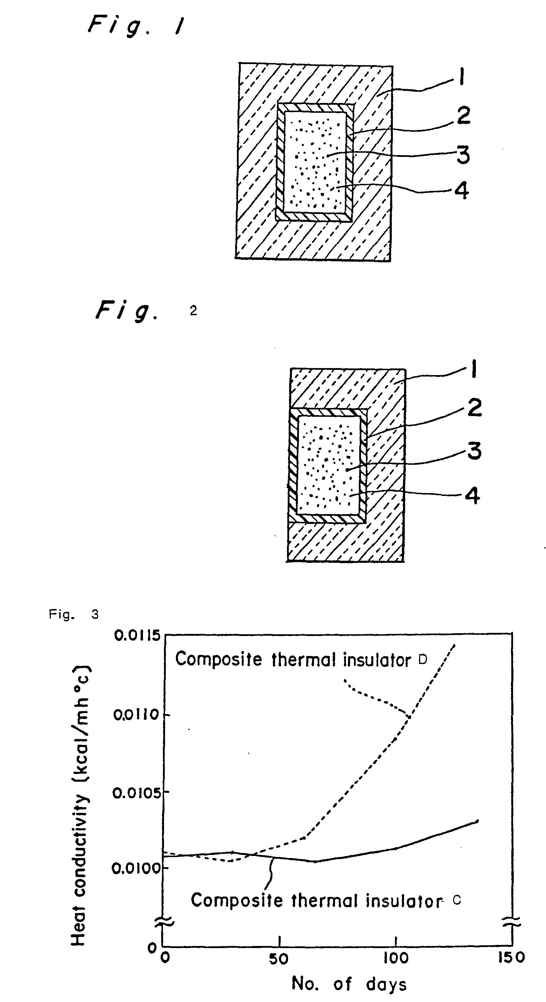

Fig. 1 shows a fundamental construction of a composite thermal insulator according to the present invention, which includes a Freon gas expanded plastic 1, a film-like plastic container 2 evacuated to form a vacuum in its interior and partly or entirely covered by said expanded plastic 1, and inorganic powder 4 containing activated carbon 3 tightly enclosed in said plastic container 2.

Fig. 1 represents the state in which the film-like plastic container 2 evacuated to form a vacuum in the interior thereof and sealed after being filled with the inorganic powder 4 containing activated carbon 3 is arranged to directly contact the expanded plastic 1 so as to be entirely covered by said expanded plastic 1.

Fig. 2 shows the state in which the film-like plastic container 2 evacuated to form a vacuum in its

2

interior and sealed after being filled with the inorganic powder 4 containing the activated carbon 3 is arranged to partly contact the expanded plastic 1.

For the expanded plastic 1, although there are available, for example, polyethylene foam, expanded polystyrene, phenol foam or rigid polyurethane foam, which have been conventionally employed according to end uses, expanded plastics having independent foams expanded by Freon gas and having a heat conductivity smaller than air are preferable as a heat insulating material. Among these expanded plastics as referred to above, a rigid polyurethane foam is particularly superior since it is expandable at the site, its heat conductivity is small, and its strength is sufficient for practical applications. It is to be noted that the expanded plastic 1 should not only have a superior heat insulating performance, but should also function to protect the film-like plastic container 2.

For the film-like plastic container 2, there is no particular limitation in the quality of material, and there may be employed, for example, single layered films or laminated films of polyethylene, nylon, polyvinyl alcohol, polyester, polypropylene or polyvinylidene chloride. Of course a part of the film-like plastic 2 may be replaced by a composite material laminated with a metallic thin film or by a film-like plastic deposited with a metallic material.

The activated carbon 3 acts to adsorb expansion gas permeating through the film-like plastic 2 and present in the expanded plastic 1. In the case where Freon gas having molecular diameters in the range of about several to $20 \times 10^{-8}$ cm is employed, the Freon gas molecules are condensed into micropores within the activated carbon so as to be adsorbed thereto. Accordingly, for the activated carbon 3, any sort of activated carbon may be employed as long as it adsorbs Freon gas, but activated carbon including micropores having pore diameters smaller than about $50 \times 10^{-8}$ cm at a higher rate is particularly suitable. In general, as compared with activated carbon processed by a chemical activation process, the activated carbon processed by a steam activation process contains micropores having diameters smaller than $50 \times 10^{-8}$ cm at a high rate, and is superior as activated carbon 3 to be used for the composite thermal insulator according to the present invention. Furthermore, steam activated carbon has a high ignition temperature as compared with that of chemically activated carbon, and is extremely safe in the drying process of the activated carbon.

In the absence of any restriction with respect to the amount of use of the activated carbon, activated carbon processed in any of the chemical activation process and steam activation process may be employed.

The smaller the particle diameter of the activated carbon 3 the lower is the heat conductivity of the composite thermal insulator according to the present invention.

In the composite thermal insulator as shown in Fig. 1 in which the inorganic powder 4 containing the activated carbon 3 is filled within the film-like plastic container 2, the activated carbon is disposed at a boundary portion between the film-like plastic container 2 and the inorganic powder 4 other than the activated carbon, because less energy is required for drying, since the activated carbon 3 and the inorganic powder 4 may be dried separately, and handling is much facilitated. In the above case, the activated carbon 3 may be disposed as it is without being accommodated in a bag or the like, at the boundary portion between the plastic container 2 and the inorganic powder 4 other than the activated carbon, but it is preferred to dispose, at the boundary portion between the plastic container 2 and the inorganic powder 4 other than the activated carbon, the activated carbon 3 prepared by such methods as accommodation of the activated carbon in a container with a favorable gas permeability, or forming the activated carbon into a flat plate-like configuration, or dispersion of the activated carbon in a substance having a gas permeability and a low heat conductivity such as a filter paper or aggregate of fibers.

With respect to the ratio of addition of the activated carbon 3 which will be described in more detail later with reference to the examples of the present invention, same will largely differ depending on the property as a gas barrier determined by the material for the film-like plastic container 2, and the configurations of the plastic container 2.

As inorganic powder 4, for example, diatomaceous earth, silica or magnesium carbonate, in a powder form, and perlite or microballoon, in a hollow spherical powder form are suitable. Although the inorganic powder 4 may be replaced by inorganic fibres such as glass fibres, asbestos, or expanded material such as expanded plastic, or an aggregate of organic fibres to obtain a composite thermal insulator having a superior performance, such materials are less advantageous in view of their costs than the inorganic powder for the composite thermal insulator. The activated carbon itself has an effect to suppress undesirable radiation of heat, but of course other substances such as aluminum powder, copper powder or carbon black, may further be added to the inorganic powder 4 depending on necessity.

The following examples illustrate the invention.

Comparative Example 1

By using 360 g of Carborafin-6 (average particle diameter 47 μm, trade name for chemically activated carbon, manufactured by Takeda Chemical Industries, Ltd. Japan) a composite thermal insulator A was prepared as follows: The activated carbon A was filled in a bag of kraft paper for heating and drying in a vacuum state for 12 h at 120°C. Thereafter, the bag thus processed was accommodated in a container made of a laminated film of polyethylene aluminum-deposited polyvinyl alcohol polypropylene and the opening of the film container was subjected to heat fusion under a vacuum of 0,013 kPa (0.1 Torr) through employment of a vacuum packing machine, and thus, a thermal insulator A measuring 250 mm×250 mm×25 mm was obtained. In the next step, the thermal insulator A thus prepared was placed in a pressure vessel having a space measuring 300 mm×300 mm×50 mm, while two-liquid mixed type expanded polyurethane was subjected to "foaming-in-place" with Freon-11 ($CFCl_3$) gas so that the surface of the thermal insulator was covered by expanded polyurethane in approximately equal thickness, and thus, the composite thermal insualtor A was obtained.

In the above particle diameter range, since the volume or bulk density of the activated carbon is reduced as the average particle diameter is decreased, the charge amount thereof was so adjusted that the thickness of the thermal insulator becomes 25 mm, with respect to the respective activated carbon.

The above composite thermal insulator A thus prepared was left to stand in a closed vessel in the Freon-II ($CFCl_3$) gas atmosphere under atmospheric pressure at 60°C, while being taken out from time to time to measure the heat conductivity for investigation of variation of the heat conductivity with time.

For the measurements of the heat conductivity, a K-matic heat conductivity measuring apparatus (manufactured by Dynatech R/D Company, U.S.A.) was employed, and the measurements were taken based on the method of ASTM (American society for testing & Materials)-C518, with one surface of the composite thermal insulator being set at 35°C and the other surface thereof set at 13°C.

A composite thermal insulator B was prepared in a similar manner as the thermal insulator A, with the exception that the activated carbon was replaced by powder of expanded perlite #419 (average particle diameter 3 μm trade name manufactured by Dicalite Orient Co., Ltd, Japan). It was also left to stand in a similar closed vessel in the Freon-II gas atmosphere under one atmospheric pressure at 60°C for the evaluation of variation of the heat conductivity with time.

Example 1

300 g of expanded perlite powder #419 (referred to in Comparative Example 1) and 0.5 g of shirasagi A (activated carbon processed by a steam activation process, trade name, manufactured by Takeda Chemical Industries Ltd, Japan) were uniformly mixed and filled in a bag of kraft paper for subsequent heating and drying in a vacuum for 12 h at 120°C. Thereafter, the bag thus processed was accommodated in a container made of a laminated film of polyethylene · polyvinyl alcohol · polypropylene, and the opening of the film container was subjected to heat fusion under a vacuum of 0,013 kPa (0.1 Torr) through employment of a vacuum packing machine, and thus, a thermal insulator measuring 250 mm×250 mm×25 mm was obtained. In the next step, the thermal insulator thus prepared was placed in a pressure vessel having a space measuring 300 mm×300 mm×50 mm, while two-liquid mixed type expanded polyurethane was subjected to "foaming-in-place" with Freon-II ($CFCl_3$) gas so that the surface of said thermal insulator was covered by expanded polyurethane in approximately equal thickness.

Subsequently, the thus prepared composite thermal insulator C was taken out from the pressure vessel, and was left to stand in a closed vessel in the atmosphere of Freon-II ($CFCl_3$) gas under one atmospheric pressure at 60°C for investigation of the variation of the heat conductivity with time. Another composite thermal insulator D was prepared in the same manner as above except that the activated carbon shirasagi A was replaced by shirasagi E-16 (trade name for chemically activated carbon, manufactured by Takeda Chemical Industries, Ltd. Japan). It was left to stand in the same closed vessel in the Freon-II ($CFCl_3$)-gas atmosphere under one atmospheric pressure at 60°C for study of the variation of the heat conductivity with time. The heat conductivities were measured in the method similar to that in Comparative Example 1.

Fig. 3 is a graph showing a comparison of the variation of heat conductivity with time in a Freon-II ($CFCl_3$) gas atmosphere under one atmospheric pressure at 60°C between the composite thermal insulator C (solid lines) including the activated carbon "Shirasagi A" processed by the steam activation process and the composite thermal insulator D (dotted lines) including the activated carbon "Shirasagi E-16" process by the chemical activation process.

As is seen from Fig. 3, the composite thermal insulator according to the present invention which employs the activated carbon processed by the steam activation process is capable of suppressing the deterioration of the heat insulating property due to reduction in the vacuum degree arising from flowing of Freon gas into the film-like plastic container, over a much longer period than that in the composite thermal insulator employing the activated carbon processed by the chemical activation process.

It should be noted here that, in Example 1 as described above, although the activated carbon is uniformly mixed into the expanded perlite powder for use, there is no particular difference in the Freon gas adsorbing capacity of the activated carbon, even when the activated carbon and expanded perlite powder are filled in separate bags having a gas permeability for the application to the composite thermal insulator.

Example 2

300 g of expanded perlite powder #419 (refered to in Comparative Example 1) were filled in a bag of kraft paper for heating and drying in a vacuum for 12 h at 120°C. The bag containing the expanded perlite powder thus processed was sandwiched between two bags also made of kraft paper (measuring 230 mm×230 mm×0.3 mm) and each containing 2.5 g of sufficiently dried Carborafin-6 (referred to in Comparative Example 1), and the bags thus prepared were accommodated in a container made of a laminated film of polyethylene aluminum-deposited polyvinyl alcohol polypropylene, and the opening of the film container was subjected to heat fusion under a vacuum of 0,013 kPa (0.1 Torr) through employment of a vacuum packing machine, and thus, a thermal insulator measuring 250 mm×250 mm×25 mm was prepared, with subsequent surrounding thereof by expanded polyurethane in a similar manner as in Comparative Example 1 to obtain a composite thermal insulator E. Upon measurement of the heat conductivity in a similar manner as in Comparative Example 1, the heat conductivity of said composite thermal insulator L at room temperature was $1{,}18 \times 10^{-4}$ W/cm°C (0.0102 kcal/mh°C). In Example 2, handling of the activated carbon was remarkably facilitated from the view points of drying and addition of the activated carbon, as compared with the case in which the activated carbon was dispersed in the expanded perlite powder.

It should be noted here that in Example 2, although the activated carbon was described to be packed in the two bags of kraft paper (each measuring 230 mm×230 mm×0.3 mm), the material, dimensions and number of the bags are not limited thereby, but may be varied in various ways within the scope depending on necessity.

Example 3

Except for employment of 33 g of a filter paper G70 containing activated carbon (trade name, manufactured by Whatman Ltd., England) as the activated carbon a composite thermal insulator F was prepared in exactly the same manner as in Example 2. Upon measurement of the heat conductivity at room temperature, the composite thermal insulator F had a heat conductivity of $1{,}16 \times 10^{-4}$ W/cm°C (0.010 kcal/mh°C).

Example 4

1.0 g of BCW 32/100 (trade name, activated carbon of coconut shells activated by steam and manufactured by Fujisawa Pharmaceutical Company Limited, Japan) packed in one bag made of polyester non-woven fabric was employed as activated carbon, while said bag was disposed between a bag of kraft paper filled with 300 g of expanded perlite powder #419 (referred to earlier) and a film-like plastic container made of a laminated film of polyethylene · aluminum deposited polyvinyl alcohol · polypropylene, and processed in exactly the same way as in Example 2 except for the above arrangement so as to obtain a composite thermal insulator G. There was also prepared another comparative composite thermal insulator H having exactly the same structure as the composite thermal insulator G except that it contained no activated carbon.

Subsequently, the composite thermal insualtors G and H thus prepared were left to stand in the same closed vessel having Freon-II ($CFCl_3$) gas atmosphere under one atmospheric pressure at 25°C for comparison of variations of the respective heat conductivities with time. Table 1 shows the heat conductivities at an initial stage and after one year at room temperature for comparison.

TABLE 1

| Composite thermal insulator | Heat conductivity (W/cm°C)(kcal/mh°C) | |
| --- | --- | --- |
| | Initial stage | After one year |
| G | $0{,}99.10^{-4}$(0.0085) | $1{,}02.10^{-4}$(0.0088) |
| H | $1{,}01.10^{-4}$(0.0087) | $1{,}35.10^{-4}$(0.0116) |

As is clear from Table 1, the composite thermal insulator according to the present invention is capable of maintaining a superior heat insulating property over a long period, and extremely useful for practical applications.

In Example 4, although 1.0 g of activated carbon was added to 300 g of expanded perlite powder, the ratio of the activated carbon should be increased in cases where the low heat conductivity is to be maintained for a longer period or where the thickness of the film-like plastic container is thin.

For further suppressing the transmission of Freon gas through the film-like plastic container, the aluminum deposited polyvinyl alcohol layer for the film-like plastic container should be replaced by a layer having a high gas barring property such as an aluminum foil, or a nylon layer in which case, the amount of activated carbon to be used is decreased.

It is also noted that, in the foregoing embodiments of the composite thermal insulator according to the present invention, although the thickness of Freon gas expanded plastic and that of the film-like plastic container are adpated to be approximately the same, the heat conductivity of the composite thermal insulator is naturally decreased as the thickness of the latter is increased.

**Claims**

1. A composite thermal insulator which comprises a Freon gas expanded plastic (1), a film-like plastic container (2) evacuated to form a vacuum in its interior and partly or entirely covered by said expanded plastic (1), and an inorganic powder (4) tightly enclosed within said plastic container (2) characterized in that said inorganic powder contains activated carbon (3) which is present at a boundary portion between said film-like plastic container (2) and said inorganic powder (4) other than the activated carbon (3) and sufficient in an amount to at least adsorb Freon gas.

2. The composite thermal insulator of claim 1, wherein said activated carbon (3) is activated by a steam activation process.

3. The composite thermal insulator of claim 1 or 2, wherein said activated carbon (3) is packed in a container having a gas permeability.

4. The composite thermal insulator of any of claims 1 to 3 wherein said activated carbon (3) has an average particle diameter smaller than 0.15 mm.

**Patentansprüche**

1. Zusammengesetzter thermischer Isolator, umfassend einen mit Freongas expandierten Kunststoff (1), einen filmförmigen Kunststoffbehälter (2), der evakuiert ist, um in seinem Inneren ein Vakuum zu bilden und teilweise oder ganz durch den expandierten Kunststoff (1) bedeckt ist, und ein anorganisches Pulver (4), das fest innerhalb des Kunststoffbehälters (2) eingeschlossen ist, dadurch gekennzeichnet, daß das anorganische Pulver Aktivkohle (3) enthält, die im Begrenzungsbereich zwischen dem filmförmigen Kunststoffbehälter (2) und dem anorganischen Pulver (4), das nicht die Aktivkohle (3) ist, und in einer ausreichenden Menge vorliegt, um wenigstens Freongas zu adsorbieren.

2. Zusammengesetzter thermischer Isolator nach Anspruch 1, wobei die Aktivkohle (3) mittels einem Dampfaktivierungsverfahren aktiviert ist.

3. Zusammengesetzter thermischer Isolator nach Anspruch 1 oder 2, wobei die Aktivkohle (3) in einem Behälter verpackt ist, der eine Gaspermeabilität besitzt.

4. Zusammengesetzter thermischer Isolator nach mindestens einem der Ansprüche 1 bis 3, wobei die Aktivkohle (3) einen durchschnittlichen Teilchendurchmesser von weniger als 0,15 mm besitzt.

**Revendications**

1. Isolant thermique composite, qui comprend une matière plastique expansée au gaz Fréon (1), un récipient (2) en matière plastique pelliculaire, à l'intérieur duquel on a formé un vide et qui est partiellement on entièrement recouvert par cette matière plastique expansée (1), et une poudre inorganique (4) enfermée de façon étanche à l'intérieur du récipient en matière plastique (2), caractérisé en ce que cette poudre inorganique contient de charbon actif (3), disposé dans une portion frontière entre le récipient en matière plastique pelliculaire (2) et cette poudre inorganique (4) autre que le charbon actif (3) et en une quantité suffisante pour adsorber au moins le gaz Fréon.

2. Isolant thermique composite selon l'une des revendication 1, dans lequel le charbon actif (3) est activé par un procédé d'activation à la vapeur.

3. Isolant thermique composite selon la revendication 1 ou la revendication 2, dans lequel le charbon actif (3) est emballé dans un récipient perméable au gaz.

4. Isolant thermique composite selon l'une des revendications 1 à 3, dans lequel le charbon actif (3) à un diamètre moyen de particules inférieur à 0,15 mm.

*Fig. 1*

*Fig. 2*

Fig. 3

Heat conductivity (kcal/mh°c)

Composite thermal insulator D

Composite thermal insulator C

No. of days

1